# EUROPÄISCHE PATENTSCHRIFT

(11) **EP 1 146 091 B1**
(45) Veröffentlichungstag und Bekanntmachung des Hinweises auf die Patenterteilung: **08.03.2006**
(21) Anmeldenummer: 01107339.2
(22) Anmeldetag: 24.03.2001
(51) Int. Cl.: C09C 3/08, C09C 1/36

(54) **Verfahren zur Herstellung von Farbmitteln**
Process for the manufacture of colourants
Procédé pour produire des colorants

(30) Priorität: 12.04.2000 DE 10018210
(43) Veröffentlichungstag der Anmeldung: 17.10.2001
(73) Patentinhaber: Sachtleben Chemie GmbH, 47198 Duisburg (DE)
(72) Erfinder: Gesenhues, Ulrich, Dr., 47441 Moers (DE); Philipps, Klaus, 47228 Duisburg (DE)
(74) Vertreter: Uppena, Franz

(56) Entgegenhaltungen:
- EP-A- 0 761 741
- DE-A- 2 843 662
- DE-B- 1 296 292
- US-A- 5 416 135
- US-A- 5 416 141

## Beschreibung

Die Erfindung betrifft ein Verfahren zur Herstellung von Farbmitteln, welche in feinteiliger Form vorliegende anorganische Festkörper enthalten, die nach diesem Verfahren hergestellten Farbmittel, sowie deren Verwendung.

Farbmittel ist eine Sammelbezeichnung für alle farbgebenden Stoffe, die nach DIN 55944 eingeteilt werden in anorganische und organische Farbmittel und diese jeweils in natürliche und synthetische Farbmittel. Die anorganischen Farbmittel sind Pigmente, die gegebenenfalls auch als Füllstoffe eingesetzt werden können. Die meisten handelsüblichen Pigmente werden vor ihrer Verwendung einer Oberflächenbehandlung unterzogen, um ihre anwendungstechnischen Eigenschaften zu verbessern. Neben der anorganischen Nachbehandlung hat insbesondere die Behandlung der Pigmente mit organischen Stoffen in den letzten 20 Jahren zunehmend an Bedeutung gewonnen. So ist bekannt, dass Titandioxid-Pigmente zur besseren Dispergierung in Lacken, Farben, Kunststoffen, Chemiefasern und anderen Polymerprodukten organisch Oberflächen-modifiziert sind (18. FATIPEC- Kongress, Venedig, 21.-26.9.1986, 3. Band, S. 55 bis 72). In der Firmenschrift der Sachtleben Chemie GmbH, Duisburg, 5/97 ist beschrieben, ultrafeines Titandioxid anorganisch mit Al₂O₃ und/oder ZrO₂ zu beschichten und anschließend einer organischen Oberflächenbehandlung zu unterwerfen, um die Benetzbarkeit und Dispergierbarkeit in Lacken, Farben, Kunststoffen, Chemiefasern und anderen Polymerprodukten zu erleichtern. Die organische Oberflächenbehandlung wird in der Weise durchgeführt, dass dem Pigment bei der trockenen oder nassen Mahlung, vor oder nach der Sprühtrocknung oder nach der endgültigen Mahlung eine pulverförmige oder flüssige organische Substanz in einer Menge von bis zu 20 Gew.-% zugesetzt wird. Die Einarbeitung der organischen Substanz erfolgt in separaten Mischbehältern oder nach ihrer Zugabe in den anschließenden Verfahrensstufen, wie z.B. in Transportschnecken, in Mühlen und in einem Sprühtrockner.

Als geeignete Substanzen für die organische Modifizierung von Oberflächen von Pigmenten sind nachfolgend aufgeführt: phosphorylierte Polyene (US-A 4209430), Organophosphatester (US-A-4183843, US-A-5397391, US-A 5318625), Organophosphat-Alkanolamin-Additionsprodukte (US-A 4357170, US-A-4377417), Polyorganosiloxane (US-A-5035748), Aminoorganosilane (US-B-030450), Alkyl- und Arylalkalisilikonate (DE-A-2012017), Fluorsilane und fluororganische Verbindungen (GB-A-1442756), Vinylpolymere (US-A-4062692), Mischungen aus Wachsen und wachsähnlichen Polymeren, wie Polyethylenglycol-Kohlenwasserstoffharzen (US-A-4230501), vollständige oder Teilester von aliphatischen, gesättigten oder ungesättigten Monocarbonsäuren und Alkoholen mit einer oder mehreren Hydroxylgruppen (GB-A-2252306, US-A-5416135 und US-A-5416141, US-A-5567754, US-A-5288320), Polyester mit Sulfonatgruppen (US-A-5143671), Polymere mit Carboxylgruppen (US-A-4235768), Fettsäureamide (US-A-3844810), Fettsäure-modifizierte Alkydharze (US-A-3728142), das Reaktionsprodukt eines Diamins mit einer Carbonsäure und einer Fettsäure (US-A-4599114), Polylactone mit endständigen OH-Gruppen (US-A-3754956), Dialkylsulfosuccinate (US-A-5830929, US-A-5908498, US-A-5733365, EP-A-0761740), Polyole, wie Glycerin, TME und TMP und ihre Umsetzungsprodukte mit Alkylenoxiden (US-A-4752340, US-A-5416135 und US-A-5416141, US-A-5530043, DE-A-4312035, DE-A-1467442 und DE-A-1296292), ethoxylierte Fettalkohole wie z.B. ethoxylierte Polyalkohole mit Alkenyl- und Alkylresten (WO 00/53679), Fettsäuren, wie Öl- und Stearinsäure und ihre Salze (US-A-4752340), Polyalkandiamine und ihre Salze mit mehrbasigen Säuren (DE-A-4312035, US-A-4752340) und epoxidierte Fettsäurederivate (US-A-5416135 und US-A-5416141, DE-A-2843662), speziell epoxidierte Fettsäureester (DE-B-1296292). Diese Substanzen wirken teilweise verbessernd in allen organischen Matrizes, teilweise auch nur bei einigen oder allen Kunststoffen oder auch nur bei Lacken. Teilweise hängt ihre Wirkung auch von der Art der Einarbeitung des Pigments in das Medium ab, wie zum Beispiel bei Kunststoffen, bei denen das Pigment direkt vor der Extrusion als Pulver zugegeben werden kann oder vorher zu einer konzentrierten Dispersion im Polymer selbst oder einem Weichmacher verarbeitet wird. Die Wirkung der organischen Oberflächenbehandlung der Pigmente hängt von deren Menge und von der Homogenität ihrer Einmischung in die Pigmente ab.

Es ist die Aufgabe der vorliegenden Erfindung, bei Farbmitteln, deren feinteilige, anorganische Festkörper an der Oberfläche mit einer oder mehreren organischen Verbindungen, ausgewählt aus Mono-Carbonsäuren und deren Derivaten, sowie Alkanpolyolen und deren Derivaten, belegt sind, den Belag so zu verändern, dass die Festkörperteilchen nicht miteinander verkleben, ihre Benetzbarkeit durch das Anwendungsmedium deutlich erleichtert, ihre Verteilung im Anwendungsmedium gegen Flockung stabilisiert wird, und ihre Farbstärke nicht abnimmt, sondern günstigenfalls zunimmt.

Die Lösung dieser Aufgabe besteht darin, dass die organischen Verbindungen, mit denen die Oberfläche der feinteiligen, anorganischen Festkörper belegt wird, epoxidiert sind und dass diese epoxidierten organischen Verbindungen mit den anorganischen Festkörpern gemischt und anschließend gemahlen werden. Der Einsatz solcher organisch oberflächenbehandelter anorganischer Festkörper führt zu einer gleichmäßigeren und höheren Qualität der Festkörper im Anwendungsmedium. Dies zeigt sich beispielsweise bei Titandioxid-Pigmenten in einer geringeren Staubentwicklung bei der Verarbeitung, einer schnelleren und vollständigeren Dispergierbarkeit, einem weniger schwankenden und höheren Aufhellvermögen, einer höheren Licht- und Wetterbeständigkeit und demzufolge einer gleichmäßigeren und höheren Qualität des Anwendungsmediums.

Gegenstand der vorliegenden Anmeldung ist somit ein Verfahren zur Herstellung von Farbmitteln, welche in feinteiliger Form vorliegende anorganische Festkörper enthalten, dadurch gekennzeichnet, dass den anorganischen Festkörpern eine oder mehrere organische Verbindungen, ausgewählt aus Mono-Carbonsäuren, alkoxidierten Mono-Carbonsäuren, sulfoxidierten Mono-Carbonsäuren, sulfatisierten Mono-Carbonsäuren, Hydroxycarbonsäuren, Ketocarbonsäuren, Alkanpolyolen, alkoxidierten Alkanpolyolen, sulfoxidierten Alkanpolyolen und sulfatisierten Alkanpolyolen zugegeben werden, wobei die organischen Verbindungen epoxidiert sind, wobei die anorganischen Festkörper ausgewählt sind aus Titandioxid-Pigmenten, Zinksulfid-Pigmenten, Lithopone, Zinkweiß, Bariumsulfat oder Blanc fixe, und wobei das Gemisch aus anorganischen Festkörpern und organischen Verbindungen anschließend gemahlen wird

Gegenstand ist ebenso ein Verfahren, dadurch gekennzeichnet, dass dem Gemisch vor der Mahlung zusätzlich ein Fettsäurepolyglycolester zugegeben wird, als auch ein Verfahren dadurch gekennzeichnet, dass die epoxidierten Verbindungen teilweise durch Ester oder Teilester ersetzt sind, wobei die Ester oder Teilester gebildet werden aus Polycarbonsäuren, welche 2 bis 6 Carboxylgruppen enthalten, und Alkyl- oder Arylalkoholen und bei dem bis zu 90 Gew.-% der epoxidierten Verbindungen durch Ester oder Teilester ersetzt sein können, sowie die Polycarbonsäuren und Alkohole epoxidiert sein können und die Alkyl- und Arylalkohole eine oder mehrere Hydroxylgruppen aufweisen können.

Weiterhin ist das anmeldungsgemäße Verfahren dadurch gekennzeichnet, dass das Gemisch 0,1 bis 20 Gew.-% der ausgewählten organischen Verbindungen enthalten kann, und die eingesetzten anorganischen Festkörper eine Korngröße d₅₀ von 0,01 bis 50 µm besitzen können.

Gegenstand sind ebenso die durch das Verfahren hergestellten Farbmittel, als auch die Verwendung der Farbmittel zur Herstellung von Kunststoffteilen, Chemiefasern, Lacken, Farben und den jeweiligen Vorprodukten.

Die vorteilhafte Wirkung der auf die Oberfläche der feinteiligen anorganischen Festkörper aufgebrachten epoxidierten organischen Verbindungen lässt sich dadurch synergetisch verstärken, dass die Oberflächen der Festkörper zusätzlich mit einem Fettsäurepolyglycolester belegt ist.

Darüber hinaus besteht die Möglichkeit, die epoxidierten Verbindungen teilweise durch Ester oder Teilester zu ersetzen, wobei die Ester oder Teilester gebildet werden aus Polycarbonsäuren, welche 2 bis 6 Carboxylgruppen enthalten, und Alkyl-oder Arylalkoholen. Die Alkyl- und Arylalkohole können eine oder mehrere Hydroxylgruppen aufweisen.

Optimale Ergebnisse werden dann erreicht, wenn die Pigmente mit 0,1 bis 20 Gew.-% organischen Verbindungen belegt sind.

Als Festkörper kommen insbesondere Titandioxid- und Zinksulfid-Pigmente, Lithopone, Zinkweiß, Schwerspat, Blanc fixe.

Der Vorteil des erfindungsgemäßen Verfahrens liegt zum einen darin, dass die Zugabe der organischen Verbindungen ohne aufwendige Verfahrensschritte, wie z.B. die Herstellung einer wässrigen Emulsion der organischen Verbindungen, erfolgt, und zum anderen, dass trotz trockener Einmischung der organischen Verbindungen die Farbstärke der Farbmittel nicht abnimmt, sondern teilweise sogar noch zunimmt. Weiterhin von Vorteil ist die relative Unempfindlichkeit der Farbstärke von der Konzentration der organischen Verbindungen, was den Dosieraufwand für diese Verbindungen in Grenzen hält.

Die nach dem erfindungsgemäßen Verfahren hergestellten Farbmittel finden Verwendung bei der Herstellung von Kunststoffteilen, Chemiefasern, Lacken, Farben und den jeweiligen Vorprodukten.

## Patentansprüche

1. Verfahren zur Herstellung von Farbmitteln, welche in feinteiliger Form vorliegende anorganische Festkörper enthalten, **dadurch gekennzeichnet, dass** den anorganischen Festkörpern eine oder mehrere organische Verbindungen, ausgewählt aus Mono-Carbonsäuren, alkoxidierten Mono-Carbonsäuren, sulfoxidierten Mono-Carbonsäuren, sulfatisierten Mono-Carbonsäuren, Hydroxycarbonsäuren, Ketocarbonsäuren, Alkanpolyolen, alkoxidierten Alkanpolyolen, sulfoxidierten Alkanpolyolen und sulfatisierten Alkanpolyolen zugegeben werden, wobei die organischen Verbindungen epoxidiert sind, wobei die anorganischen Festkörper ausgewählt sind aus Titandioxid-Pigmenten, Zinksulfid-Pigmenten, Lithopone, Zinkweiß, Bariumsulfat oder Blanc fixe, und wobei das Gemisch aus anorganischen Festkörpern und organischen Verbindungen anschließend gemahlen wird.

2. Verfahren nach Anspruch 1, **dadurch gekennzeichnet, dass** dem Gemisch vor der Mahlung zusätzlich ein Fettsäurepolyglycolester zugegeben wird.

3. Verfahren nach Anspruch 1 oder 2, **dadurch gekennzeichnet, dass** die epoxidierten Verbindungen teilweise durch Ester oder Teilester ersetzt sind, wobei die Ester oder Teilester gebildet werden aus Polycarbonsäuren, welche 2 bis 6 Carboxylgruppen enthalten, und Alkyl- oder Arylalkoholen.

4. Verfahren nach Anspruch 3, **dadurch gekennzeichnet, dass** bis zu 90 Gew.-% der epoxidierten Verbindungen durch Ester oder Teilester ersetzt sind.

5. Verfahren nach Anspruch 4, **dadurch gekennzeichnet, dass** die Polycarbonsäuren und Alkohole epoxidiert sind und die Alkyl- und Arylalkohole eine oder mehrere Hydroxylgruppen aufweisen.

6. Verfahren nach einem der Ansprüche 1 bis 5, **dadurch gekennzeichnet, dass** das Gemisch 0,1 bis 20 Gew.-% der ausgewählten organischen Verbindungen enthält.

7. Verfahren nach einem der Ansprüche 1 bis 6, **dadurch gekennzeichnet, dass** die eingesetzten anorganischen Festkörper eine Korngröße d₅₀ von 0,01 bis 50 µm besitzen.

8. Nach einem der vorhergehenden Ansprüche hergestellte Farbmittel.

9. Verwendung der Farbmittel nach Anspruch 8 zur Herstellung von Kunststoffteilen, Chemiefasern, Lacken, Farben und den jeweiligen Vorprodukten.

## Claims

1. Process for the production of colourants that contain inorganic solids present in finely divided form, **characterised in that** one or more organic compounds selected from monocarboxylic acids, alkoxidised monocarboxylic acids, sulfoxidised monocarboxylic acids, sulfated monocarboxylic acids, hydroxycarboxylic acids, ketocarboxylic acids, alkane polyols, alkoxidised alkane polyols, sulfoxidised alkane polyols and sulfated alkane polyols are added to the inorganic solids, wherein the organic compounds are epoxidised, wherein the inorganic solids are selected from titanium dioxide pigments, zinc sulfide pigments, lithopones, zinc white, barium sulfate or blanc fixe and wherein the mixture of inorganic solids and organic compounds is then ground.

2. Process according to claim 1, **characterised in that** a fatty acid polyglycol ester is additionally added to the mixture before the grinding.

3. Process according to claim 1 or 2, **characterised in that** the epoxidised compounds are partially replaced by esters or partial esters, the esters or partial esters being formed from polycarboxylic acids that contain 2 to 6 carboxyl groups, and alkyl alcohols or aryl alcohols.

4. Process according to claim 3, **characterised in that** up to 90 wt.% of the epoxidised compounds are replaced by esters or partial esters.

5. Process according to claim 4, **characterised in that** the polycarboxylic acids and alcohols are epoxidised and the alkyl alcohols and aryl alcohols have one or more hydroxyl groups.

6. Process according to one of claims 1 to 5, **characterised in that** the mixture contains 0.1 to 20 wt.% of the selected organic compounds.

7. Process according to one of claims 1 to 6, **characterised in that** the inorganic solids that are used have a grain size d₅₀ of 0.01 to 50 µm.

8. Colourants produced according to one of the preceding claims.

9. Use of the colourants according to claim 8 for the production of plastics parts, chemical fibres, lacquers, paints and the respective precursors.

## Revendications

1. Procédé de préparation d'agents colorants contenant des matières solides minérales, présentes sous forme finement divisée, **caractérisé en ce que** l'on ajoute aux matières solides minérales un ou plusieurs composés organiques, choisis parmi les acides monocarboxyliques, les acides monocarboxyliques alcoxylés, les acides monocarboxyliques sulfoxylés, les acides monocarboxyliques sulfatés, les acides carboxyliques hydroxylés, les acides carboxyliques cétoniques, les alcanepolyols, les alcanepolyols alcoxylés, les alcanepolyols sulfoxylés et les alcanepolyols sulfatés, les composés organiques sont époxydés, les matières solides minérales sont choisies parmi les pigments de dioxyde de titane, les pigments de sulfure de zinc, le lithopone, le blanc de zinc, le sulfate de baryum et le blanc fixe, et l'on broie ensuite le mélange de matières solides minérales et de composés organiques.

2. Procédé selon la revendication 1, **caractérisé en ce que** l'on ajoute en outre au mélange, avant le broyage, un ester de polyglycol d'acide gras.

3. Procédé selon la revendication 1 ou 2, **caractérisé en ce que** les composés époxydés sont remplacés partiellement par des esters ou des esters partiels qui sont formés à partir d'acides polycarboxyliques contenant 2 à 6 groupes carboxyliques, et d'alcools alkyliques ou aryliques.

4. Procédé selon la revendication 3, **caractérisé en ce que** jusqu'à 90 % en poids des composés époxydés sont remplacés par des esters ou des esters partiels.

5. Procédé selon la revendication 4, **caractérisé en ce que** les acides polycarboxyliques et les alcools sont époxydés et les alcools alkyliques ou aryliques présentent un ou plusieurs groupes hydroxyles.

6. Procédé selon l'une quelconque des revendications 1 à 5, **caractérisé en ce que** le mélange contient 0,1 à 20 % en poids des composés organiques choisis.

7. Procédé selon l'une quelconque des revendications 1 à 6, **caractérisé en ce que** les matières solides minérales utilisées présentent une taille de particule d₅₀ de 0,01 à 50 µm.

8. Agent colorant préparé par le procédé selon l'une quelconque des revendications précédentes.

9. Utilisation de l'agent colorant selon la revendication 8, pour la préparation de pièces en matière plastique, de fibres synthétiques, de laques, de couleurs et des produits intermédiaires respectifs.
